(19) Europäisches Patentamt
European Patent Office
Office européen des brevets

(11)  EP 2 630 520 B1

(12)  **EUROPEAN PATENT SPECIFICATION**

(45) Date of publication and mention
of the grant of the patent:
**01.04.2015  Bulletin 2015/14**

(21) Application number: **11774050.6**

(22) Date of filing: **24.10.2011**

(51) Int Cl.:
***G01V 11/00*** (2006.01)

(86) International application number:
**PCT/EP2011/068539**

(87) International publication number:
**WO 2012/052564 (26.04.2012 Gazette 2012/17)**

(54) **AUTONOMOUS UNDER WATER VEHICLE FOR THE ACQUISITION OF GEOPHYSICAL DATA**

AUTONOMES UNTERWASSERFAHRZEUG ZUR ERFASSUNG VON GEOPHYSIKALISCHEN DATEN

VÉHICULE SOUS-MARIN AUTONOME POUR L'ACQUISITION DE DONNÉES GÉOPHYSIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2010  IT MI20101952**

(43) Date of publication of application:
**28.08.2013  Bulletin 2013/35**

(73) Proprietor: **ENI S.p.A.
00144 Rome (IT)**

(72) Inventors:
• **GIORI, Italiano
I-20060 Mediglia (IT)**
• **ANTONELLI, Massimo
29121 Piacenza (IT)**
• **FINOTELLO, Roberto
I-Venezia Mestre (IT)**

(74) Representative: **Mauro, Marina Eliana et al
Murgitroyd & Company
Piazza Borromeo, 12
20123 Milano (IT)**

(56) References cited:
**US-A1- 2002 171 427    US-A1- 2010 153 050**

## Description

The present invention relates to an autonomous underwater vehicle for the acquisition of geophysical data, equipped with instruments for the collection of said data on the seabed.

The analysis of the seabed allows useful information to be obtained on the composition and structure of the subsoil itself.

In particular, a correct evaluation of certain areas of the subsoil, allows the identification of possible hydrocarbon deposits.

One of the analysis systems used is a magnetometric survey which exploits the Earth's magnetism and is normally carried out on relatively large regions of the territory.

All variations in the magnetic field which cannot be attributed to natural or artificial causes, are due to magnetic susceptibility contrasts in the subsoil rocks. The rocks which provide these contrasts are mainly magmatic rocks which normally form the substrate on which sedimentary rocks lie.

Magnetometric surveys and those of the magnetic gradient allow the thickness of sedimentary rocks to be estimated, detecting possible volcanic intrusions/effusions present in the subsoil.

A further analysis system of the subsoil is represented by gravimetric measurement which allows the monitoring of variations in gravity acceleration.

The gravimeter allows the measurement of gravity acceleration, and therefore of the mass differences of the subsoil rocks, revealing variations in the density of the lithologies situated beneath the gravimeter, for example a basalt layer has a greater gravimetric effect than a salt layer, as its specific density is much higher than that of salt.

This measurement normally requires numerous corrections, as the measurement of gravity is influenced by many factors, such as the topography of the area, for example, the latitude, the tides and the level at which the measurement is effected.

In order to obtain significant results and for a correct interpretation of the data, the instruments must reach a very high level of sensitivity and accuracy, in the order of microGals (1 $\mu$Gal = $10^{-8}$ m/sec$^2$) i.e. $10^{-9}$ g (gravity acceleration g = 9.80665 m/s$^2$). At this sensitivity level, spurious effects not connected to the mass distribution in the subsoil, either due to topographic irregularities, or to anthropic artefacts on the surface, or temporary fluctuations of the gravity of an astronomical origin (tides), can overlap the useful signal, making the detection complex.

In addition to this phenomenon, there are instrumental drifts, whose effects become more significant with a prolonged data collection.

In order to overcome these difficulties, the gradiometric method has been developed, wherein the data to be processed is a component of the gradient tensor of g, determined as the difference between the values of g measured with respect to a fixed base distance.

There are various methods and systems in the state of the art which use gravimetric and/or magnetometric analysis for acquiring information on the subsoil.

Patent WO 2006/020662, for example, describes an analysis method of a geographical area using an aeroplane suitably equipped with gravimetric instruments.

In particular, according to this method, geophysical data relating to the area being examined, are collected, geophysical parameters relating to the area under examination are calculated and a relation between the data collected and those predicted is then defined.

These geophysical data can be revealed with a gravimeter or with a gravimetric gradiometer, in order to analyze the surface density of the area examined.

Particularly in the hydrocarbon industry, the Full Tensor Gravity Gradiometer (FTG) system for offshore explorations, developed by Bell Aerospace (present Lockheed Martin), is already known.

Two examples of the industrial application of the FTG technology are Air-FTG® and Marine-FTG®.

The first is an airborne gravimetric/gradiometric survey system, whereas the second is a marine system.

Both systems provide information on the gravimetric gradient by means of a tensor analysis and a reduction process of the disturbances generated by the transporting means and other external factors.

A further example of an airborne gradiometric analysis system is the Falcon TM airborne gravity gradiometer (AGG) of the company BHP-Billiton, which by flying over geographical areas, can measure the changes in the Earth's gravity.

In particular, the measurement of the gradient is obtained as the difference between the responses measured by two gradiometers. The data revealed with this system must then be purified of interferences relating to the air transportation means.

The known art, however, has various limits associated with the quality of the gravimetric data measured, the data, in fact, are normally acquired by instruments positioned in the vicinity of the sea level or even above the level itself, in this way, the measurement instrument is often away from the object measured. The intensity of the gradiometric signal generated by a mass structure diminishes with the cubic distance, consequently detections of the gravity gradient relating to the seabed effected by gravimetric gradiometers positioned close to or above the sea surface suffer from the distance in terms of accuracy of the signal.

There is therefore a wide margin for improving the quality and reliability of geophysical detections, particularly if directed towards the search for new formations potentially suitable for the production of hydrocarbons.

A further technique known in the state of the art is described in patent application US 2010/0153050, in which an AUV comprising a gravimetric sensor is used for surveying the field of gravity close to the seabed.

In particular, this document describes a system provided with a gravity sensor comprising a motorized cardan joint, a movement sensor assembled on the joint, a gravimetric sensor assembled on the joint and a recipient capable of containing the above components, installable inside an AUV.

The use of a gravimeter onboard an AUV for surveying the gravitational field, however, has various limits.

Gravimeter, in fact, is not capable of separating effects due to the acceleration of gravity with respect to effects due to inertial accelerations of the underwater vehicle along the vertical component.

Gravimetric gradiometer, on the contrary, by measuring the gravity gradient with two accelerometers, allow the inertial effects, common to the two instruments, to be annulled.

The Applicant has now found a system and set-up an apparatus suitable for measuring the gravimetric and magnetometric data in the vicinity of the seabed, so as to obtain results which are qualitatively higher than those obtained either on or above the sea level. The resolution which can be obtained, in fact, from surveys effected with sensors situated at a limited distance from the potential object of the survey is greater, both in amplitude- and frequency of anomalies, for both the gravitational and magnetic field.

Furthermore, in the state of the art, there are no combined measurement methods of the gravimetric and magnetic gradient.

A further objective of the present invention is to combine the measurement of the gravity gradient with the measurement of the magnetic gradient to obtain qualitatively improved information on the sea subsoil.

The known art, moreover, does not describe survey and detection methods of magnetic gradiometric and gravity data, effected with underwater transportation means capable of reaching profound depths.

A first object of the present invention therefore relates to an autonomous underwater vehicle equipped for the acquisition of the gravimetric and magnetic gradient near the seabed, characterized in that it comprises:

- at least one gravimetric gradiometer;
- at least one magnetic gradiometer.

According to a preferred embodiment of the present invention, said gravimetric gradiometer measures the vertical component of the gravimetric gradient Tzz.

According to a preferred embodiment of the present invention, the gravimetric gradiometer used in the autonomous equipped underwater vehicle, comprises:

- a first spherical casing connected to the autonomous equipped underwater vehicle and capable of resisting high pressures;
- a second casing having smaller dimensions than the first casing and connected to it by means of a cardan joint system;
- a third casing having smaller dimensions than the second casing and connected to it by means of a cardan joint system which allows its oscillation inside the second casing, wherein said third casing is provided with a system of weights installed in the lower part;
- two accelerometers aligned along the vertical, situated at a distance of less than 60 cm from each other, preferably at a distance ranging from 10 to 40 cm, and constrained inside the structure of the third casing.

The use of a gravimetric gradiometer allows effects due to the acceleration of the vehicle along the vertical component to be eliminated.

Thanks to said cardan joint system of the second casing, to said cardan joint and to said system of weights of the third casing, the accelerometers contained inside the third casing are always aligned with respect to the local vertical and at the same time aligned with each other. Said joints therefore allow pitching, yawing and rolling movements of the autonomous equipped underwater vehicle, to be compensated.

In particular, said gravimetric gradiometer comprises two accelerometers with a sensitivity of 1

$$\mu Gal \Big/ \sqrt{Hz}$$ within a wide range of frequencies, preferably lower than $10^{-1}$ Hz and more preferably ranging from $10^{-4}$ Hz to $10^{-2}$ Hz.

Said gravimetric gradiometer has a suspension system capable of maintaining the sensitive axis of the two elements aligned along the local vertical, with the necessary precision for effecting the gradiometric measurements within the measurement frequency band.

In particular, said gravimetric gradiometer is positioned near the barycentre of said autonomous equipped underwater vehicle for reducing disturbances on the measurement of the instrument.

According to a preferred embodiment of the present invention, said magnetic gradiometer consists of at least two scalar magnetometers, preferably 3, integral with said vehicle and situated inside and/or outside the hull of the vehicle.

According to a particular embodiment of the present invention, said scalar magnetometers are positioned at a suitable distance from each other, preferably ranging from 20 cm to 10 m, more preferably from 50 cm to 1.5 m.

According to a particular embodiment of the present invention, said scalar magnetometers forming said magnetic gravimeter effect measurements of the magnetic field with an accuracy of up to 0.01 nT, preferably up to 0,1 nT (nT = $10^{-9}$ Tesla) .

Said scalar magnetometers preferably measure the magnetic field with Nuclear Magnetic Resonance technologies.

It should be pointed out that said scalar magnetometer for the present invention is known in the state of the art and available to experts in the field without any additional burden with respect to the normal working routine.

According to a preferred embodiment of the present invention, said autonomous equipped underwater vehicle comprises:

- a hull;
- at least one propulsion system;
- at least one actuation system;
- at least one feeding system;
- at least one control system.

According to a preferred embodiment of the present invention, said hull confers high aerodynamic properties to said vehicle.

In particular, said hull can be made of aluminium or fibreglass, and have an overall length ranging from 50 cm to 15 m, preferably ranging from 3 m to 10 m.

According to a preferred embodiment of the present invention, said hull can be flooded in its interior to avoid excessive pressure charges.

According to a particular preferred embodiment of the present invention, in order to increase the floating of said vehicle, expandable polymeric foams are present inside said hull, preferably obtained with the spray technique.

According to a preferred embodiment of the present invention, said propulsion system comprises at least one propellant positioned preferably astern, capable of ensuring the necessary thrust for the navigation of the vehicle.

According to a preferred embodiment of the present invention, said actuation system comprises at least one rudder, for directing said vehicle, and/or at least one stabilizer, for ensuring stability along the routes of said vehicle.

According to a preferred embodiment of the present invention, said feeding system comprises at least one battery, preferably a lithium battery, and/or a management system of the battery(ies), capable of optimizing and protecting the battery(ies) and also managing the charging/running down process.

In a particular embodiment of the present invention, said feeding system has at least two batteries, at least one for feeding the electronics onboard and at least one for feeding the propulsion system and actuation system.

According to a preferred embodiment of the present invention, said control system can consist of an electronic processor capable of controlling the propulsion system and/or actuation system and/or feeding system in addition to the instruments present onboard of said autonomous equipped underwater vehicle.

In a particular embodiment of the present invention, said control system can be programmable.

According to a preferred embodiment of the present invention, said autonomous equipped underwater vehicle can comprise at least one of the following instruments:

- a bathometer;
- an echo-sounder;
- an obstacle detector;
- a sonar;
- a speedometer;
- a methane sensor;
- a thermometer.

In particular, said bathometer allows the depth to be measured in which said vehicle is situated, whereas said echo-sounder allows the distance to be measured of said vehicle from the seabed.

In particular, said obstacle detector and said sonar allow the existence of obstacles to be verified during the advancing of said vehicle.

In a particular embodiment of the present invention, said speedometer can be of the DLV (Doppler Velocity Log) type.

In particular, said methane sensor can detect possible presences of hydrocarbons near the seabed, which cannot be detected on or above sea level.

According to a preferred embodiment of the present invention, the data collected by the various instruments onboard are kept in at least one electronic file present onboard said vehicle.

In particular, said data collected can be transmitted by said vehicle to an external data collection base by means of at least one of the following means:

- a radio or wireless communication system;
- a cable;
- a radio modem.

In particular, said radio modem allows the transmission of said data collected from depth to the surface.

According to a preferred embodiment of the present invention, said equipped underwater vehicle can contain a localization system, comprising at least one of the following instruments:

- a GPS satellite system;
- an optical transmitter;
- a radio transmitter;
- an acoustic transmitter;
- a transponder.

In particular, said optical transmitter, said radio transmitter and/or said acoustic transmitter allow the localization of the vehicle in the case of adverse weather conditions, such as for example, fog or rough sea.

In particular, the optical transmitter emits light signals, the radio transmitter radio signals and the acoustic transmitter sound signals.

By responding to an interrogation signal coming from a support ship, said transponder allows the vehicle to be localized.

An expert in the field is free to select the moving organs, electro-mechanical devices, in addition to the materials of said equipped underwater vehicle, in order to minimize the interferences of the same on the instruments present onboard the vehicle, minimizing in particular the modifications in the magnetic and gravitational field.

It should be noted that these instruments are known in the art and available to experts in the field without any additional burden with respect to the normal working routine.

It should be noted that said vehicle can independently reach the seabed or the predefined exploration level by means of instructions provided by said control system.

In a preferred embodiment of the present invention, said autonomous equipped underwater vehicle allows underwater explorations at considerable depths, preferably as far as 3,000 meters.

In particular, said instruments and said systems can be contained in hermetic containers, resistant to high pressures, preferably up to 400 bar, wherein said containers are positioned inside said hull.

In a further embodiment of the present invention, said hull of said vehicle is hermetic and watertight in its interior, and is produced with characteristics and materials capable of resisting high pressures, preferably up to 400 bar.

In a preferred embodiment of the present invention, said autonomous equipped underwater vehicle can comprise an immersion/emersion system.

In a particular embodiment of the present invention, said immersion/emersion system consists of two electromechanical ballast release units, which allow the release of a first ballast load once the desired exploration level has been reached and the release of a second ballast load to allow the emersion of said vehicle from the depths.

Said immersion/emersion system allows to avoid the use of the propulsion system by optimizing the running of the feeding system.

It should be pointed out that in order to optimize the energy saving of said vehicle, this can be transported from and to the exploration site by means of a small support ship, preferably equipped with a loading crane for the release and recovery of the vehicle itself.

Said autonomous equipped underwater vehicle allows detailed explorations with a regular and/or restricted survey network, regardless of the depth of the site explored.

Said control system suitably programmed allows the vehicle to effect:

- straight trajectories on a horizontal plane at a constant rate;
- straight trajectories in space at a constant rate;
- curved trajectories on a horizontal plane with a programmed curvature radius;
- curved trajectories in space with a programmed curvature radius.

According to a preferred embodiment, said vehicle can be used for identifying potential areas useful for oil exploration.

According to a further preferred embodiment, said vehicle can be used for monitoring the mass variations connected to the production and/or storage of hydrocarbons in underwater fields.

A second object of the present invention relates to an analysis method of the geophysical characteristics of the subsoil, comprising the acquisition of the gravimetric and magnetic gradient in an underwater environment characterized by the following phases:

- use of an autonomous equipped underwater vehicle according to the present invention;
- immersion of said vehicle to the proximity of the seabed;
- navigation along a programmed route;
- acquisition and storage of the data collected by said gradiometers and said instruments with correlation to the geographic measurement point;
- recovery of the data collected and use thereof for geophysical analysis of the subsoil.

According to an embodiment of the present method, said vehicle dives to an exploration depth preferably ranging from 20 to 150 meters from the sea-bottom.

According to a preferred embodiment of the present method, said vehicle, during the acquisition phase, follows programmed routes with trajectories on the horizontal plane to avoid disturbances on the instrumental measurements, in particular in said gradiometers.

In a preferred embodiment of the present method, said data collected are recovered from said vehicle by means of wireless connections or cable connections, to be analyzed and combined, and to obtain accurate information on the geophysical conditions of the subsoil.

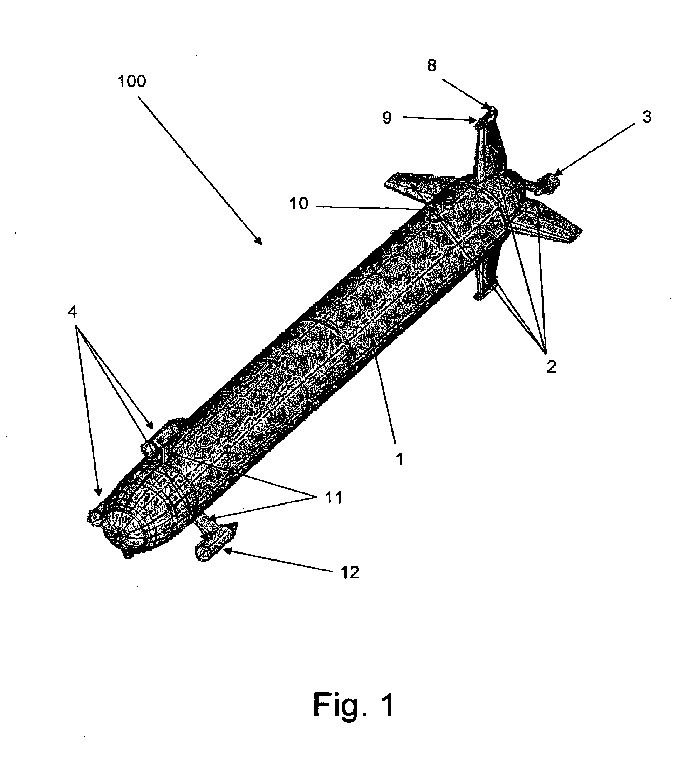

Further characteristics and advantages of the autonomous equipped underwater vehicle and analysis method of the geophysical characteristics of the subsoil of the present invention will appear more evident from the following description of one of its embodiments, provided for illustrative and non-limiting purposes, with reference to Figures 1-2 indicated hereunder, wherein:

- Figure 1: schematically represents a perspective view of an embodiment of the autonomous equipped underwater vehicle;
- Figure 2: represents a schematic illustration of a side view of an embodiment of the autonomous equipped underwater vehicle and its main systems and instruments;

- Figure 3: represents a schematic sectional view of the autonomous equipped underwater vehicle, showing a preferred embodiment of the gravimetric gradiometer;
- Figure 4: represents a comparative graph between the gravity gradient Tzz revealed along a route close to the sea surface with respect to a route at the seabed.

With reference to Figure 1, the autonomous equipped underwater vehicle (100) comprises a magnetic gradiometer (4) consisting of 3 scalar magnetometers (12) positioned at a certain distance with specific supports (11) integral with the hull (1) of the vehicle.

Said vehicle (100) has a propulsion system (3) and an actuation system (2), consisting, in the embodiment described, of fins equipped with rudders.

It can be observed that said vehicle (100) is also equipped with a GPS satellite system (9), an optical transmitter (8), and a radio modem (10).

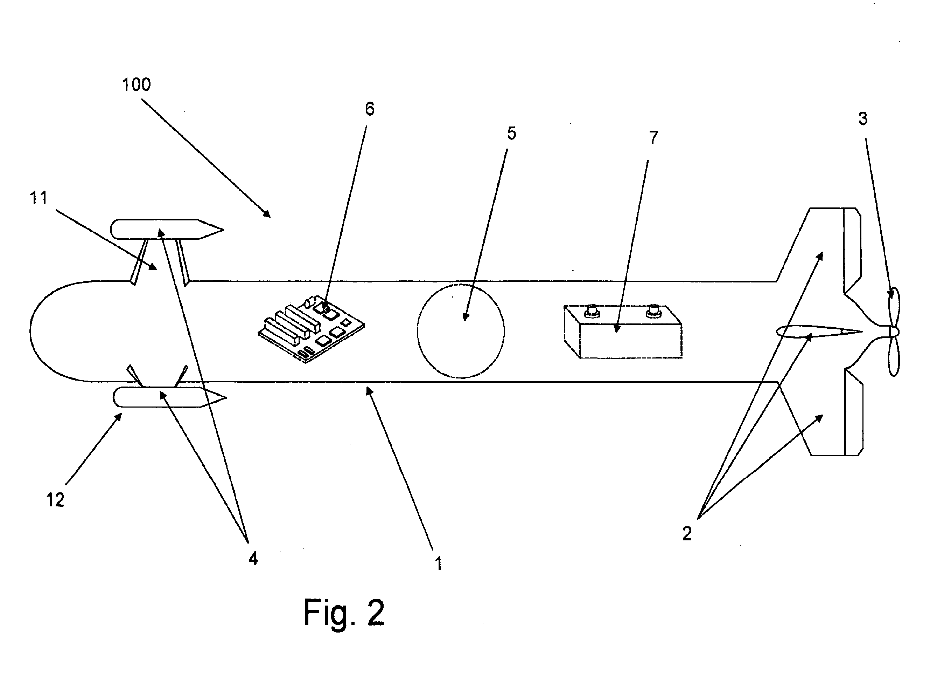

With reference to figure 2, said autonomous equipped underwater vehicle (100) contains in its interior a gravimetric gradiometer Tzz (5), the feeding system (7) and programmable control system (6), represented in the figure with a dashed line as they are inside the hull.

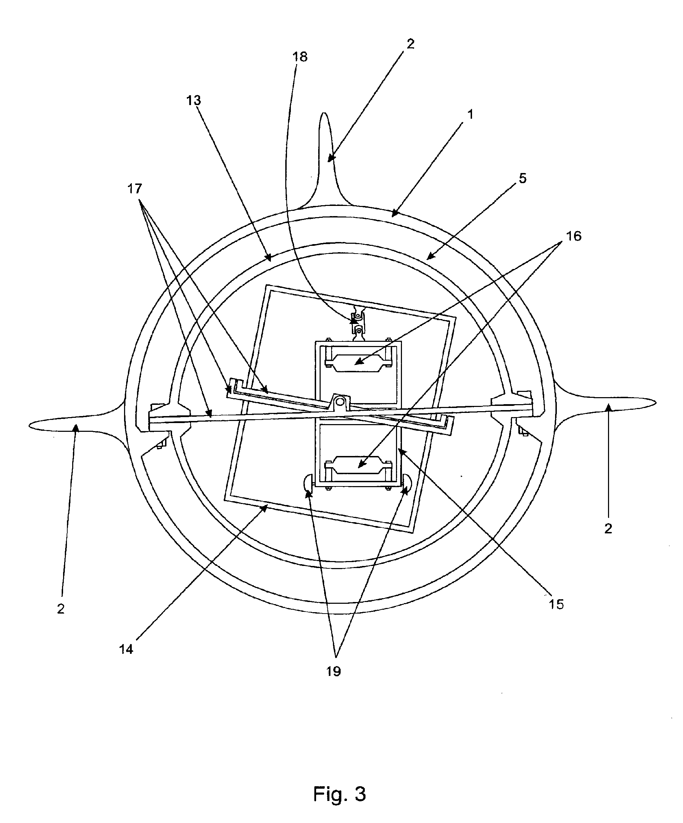

With reference to figure 3, said autonomous equipped underwater vehicle (100) contains in its interior, a first casing (13) having a prevalently spherical form and with a thickness which is such as to resist the high pressures present in seabeds.

Said second casing (14) is connected by means of a cardan joint system (17) to the first casing (13) which encloses it.

This cardan joint system (17) allows the second casing (14) to freely rotate inside the first casing (13) according to the axis x, y and z.

A third casing (15) is connected by means of a cardan joint (18) to the second casing (14) which encloses it.

This cardan joint (18) allows the third casing (15) to freely oscillate inside the second casing (14).

The third casing (15) encloses in its interior, a pair of accelerometers (16) aligned with each other and situated at a certain distance. Furthermore, the third casing (15) comprises a system of weights (19) situated in correspondence with the lower part of the casing (15).

The cardan joint (18), together with the system of weights (19) and system of cardan joints (17), allows the accelerometers (16) of the gravimetric gradiometer (5) to be kept aligned according to the local vertical.

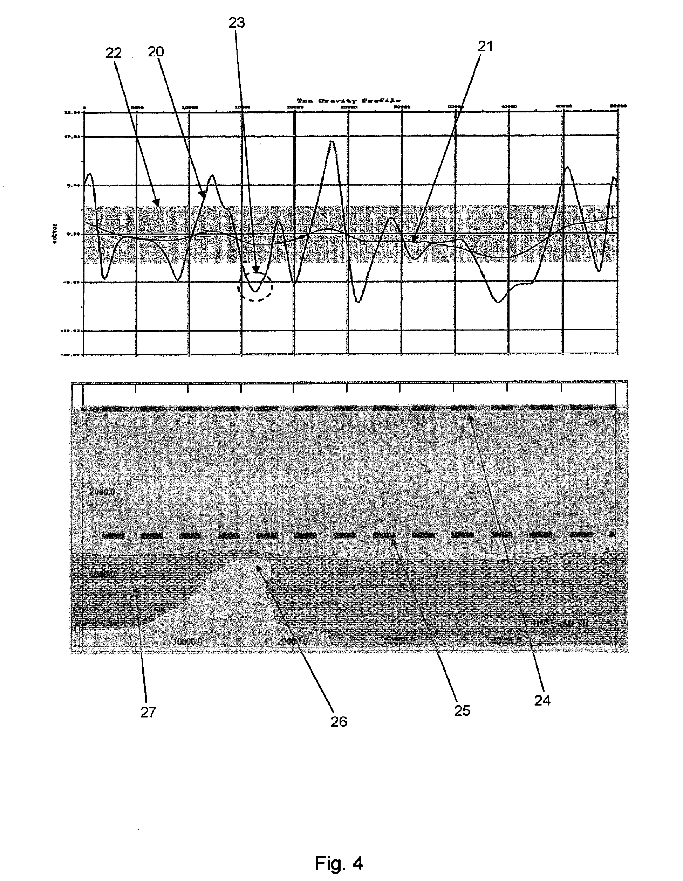

In order to better illustrate the results obtainable in terms of measurement of the gravimetric gradient, when this is installed onboard the autonomous equipped underwater vehicle (100), figure 4 shows a comparative graph relating to the gravity gradient Tzz.

In particular, two simulations of the gradient Tzz were effected by means of a gravimetric gradiometer with a sensitivity of 5 Eotvos (resolution band 22) installed onboard a ship (route 24), therefore near the surface, and onboard the autonomous equipped underwater vehicle (100) in navigation at a depth of 3.000 metres (route 26).

Both means followed the same route, in order to survey the gravity gradient Tzz of the same area.

In figure 4 it can be observed that the gravimetric gradiometer installed onboard the autonomous underwater vehicle (curve 20) is able to reveal gravitational anomalies which could not be measured on the surface (curve 21).

In particular, the peak (23) shows how the gravimetric gradiometer installed on the autonomous underwater vehicle (100) is capable of revealing a salt dome (26) present beneath the layer of clay (27) of te seabed.

An illustrative and non-limiting example is provided hereunder for a better understanding of the present invention and for its embodiment.

Example

An autonomous equipped underwater vehicle in accordance with Figure 1 and 2 was used for the purpose.

An autonomous equipped underwater vehicle (100) was used, of about 7 metres in length, 2, 000 kg in dry weight and -20 kg of weight in water, based on the following functional requisites:

- operative depth: up to 3,000 metres;
- operative autonomy: up to 20 hours;
- exploration area: route following straight equispaced trajectories of 500-1,000 metres with a square and/or rectangular network;

- exploration operating parameters:

  • constant velocity 3 knots (1.5 m/s);
  • height from the bottom 30-50 metres.

The feeding system is based on lithium cell batteries (7) which can be replaced and recharged by means of a cable outside the vehicle.

The following instruments are installed onboard the vehicle:

- gravimetric gradiometer (5) with an axis for measuring the component Tzz; the two single sensitive elements (16) of the gradiometer have a sensitivity equal to 1 $\mu$Gal, within a frequency range of $10^{-3}$ to $10^{-1}$ Hz. The gradiometer was hung by means of a system capable of keeping the sensitive axes of the two gravimeters aligned along the local vertical with the necessary precision for effecting gradiometric measurements in the frequency band of interest;

- gradiometer for the differential measurement of the magnetic field (4); consisting of 3 scalar magnetometers (12) integral with the hull (1) and positioned outside the same by means of specific supports (11). In particular, a gradiometer capable of effecting accurate measurements of the gradient in the three dimensions in real time, was used. The magneto-gradiometer is based on an Overhauser technology capable of providing data with low disturbance, high accuracy and repeatability. The sensors are synchronized with each other in less than 0.1 ms through a single electronic unit in order to eliminate any possible noise caused by steep slopes or sudden changes in direction:
- methane sensor; a sensor for the immediate recognition of hydrocarbons (CH4) was used, also at significant depths.

The vehicle used is composed of the following main units:

- Integrated Navigation Sensorial System, based on:

  • an inertial platform, for measuring the rolling, pitching and yawing, in addition to accelerations along the three Cartesian axes;
  • echo-sounder, for measuring the height from the seabed;
  • sonar doppler, for measuring the velocity during the advancing;
  • sonar system for verifying the existence of obstacles during the advancing;
  • depth sensor;
  • acoustic transponder for localizing the vehicle from the support ship;

- Auxiliary communication and localization devices:

  • GPS satellite system (9) for determining the re-emersion position at the surface;
  • radio modem (10) for transmitting the position to the surface;
  • radio and optical transmitter (8), each provided with autonomous activation and battery, for localization in the case of adverse weather conditions (fog and rough sea);
  • acoustic transmitter, provided with autonomous activation and battery, for localizing the vehicle should it remain settled on the seabed;

- Propulsion and Actuation System, composed of:

  • stern propellers (3), for ensuring the necessary thrust for navigation;
  • rudders and stabilizers (2), for directing the thrust and ensuring stability along directions not actively controlled;

- Feeding System (7) based on secondary lithium batteries;
- Hull (1), suitably shaped for minimizing resistance to the advancing in water and containing:

  • hermetic and pressurized containers for the control electronics and feeding system;
  • expanded polymeric foams for increasing the floating of the vehicle;

- Immersion Ballast Release Unit once the desired depth has been reached and Emergency Ballast Release Unit, which can be activated in the case of necessity or feeding exhaustion.

**Claims**

1. An autonomous equipped underwater vehicle (100) for the acquisition of the gravimetric and magnetic gradient near the seabed, **characterized in that** it comprises:

   - at least one gravimetric gradiometer (5);
   - at least one magnetic gradiometer (4).

2. The autonomous equipped underwater vehicle (100) according to claim 1, wherein said gravimetric gradiometer (5) measures the vertical component Tzz of the gravimetric gradient.

3. The autonomous equipped underwater vehicle (100) according to any of the previous claims, wherein said gravimetric gradiometer (5) comprises two accelerometers having a sensitivity of 1 $\mu Gal / \sqrt{Hz}$ within a range of frequencies lower than $10^{-1}$ Hz.

4. The autonomous equipped underwater vehicle (100) according to claim 3, wherein said range of frequencies ranges from $10^{-4}$ Hz to $10^{-2}$ Hz.

5. The autonomous equipped underwater vehicle (100) according to any of the previous claims, wherein said gravimetric gradiometer (5) is positioned in the barycentre of said autonomous equipped underwater vehicle (100).

6. The autonomous equipped underwater vehicle (100) according to claim 1, wherein said magnetic gradiometer (4) consists of at least two scalar magnetometers (12) integral with said vehicle (100) and situated inside and/or outside the hull (1) of the vehicle (100).

7. The autonomous equipped underwater vehicle (100) according to claim 6, wherein said scalar magnetometers (12) forming said magnetic gradiometer (4) are 3.

8. The autonomous equipped underwater vehicle (100) according to claim 6, wherein said scalar magnetometers (12) are positioned at a distance of 20 cm to 10 m from each other.

9. The autonomous equipped underwater vehicle (100) according to claim 8, wherein said scalar magnetometers (12) are positioned at a distance of 40 cm to 1.5 m. from each other.

10. The autonomous equipped underwater vehicle (100) according to claim 6, wherein said scalar magnetometers (12) forming said magnetic gradiometer (4) effect measurements of the magnetic field with an accuracy of up to 0.01 nT.

11. The autonomous equipped underwater vehicle (100) according to claim 10, wherein said scalar magnetometers (12) forming said magnetic gradiometer (4) effect measurements of the magnetic field with an accuracy of up to 0.1 nT.

12. The autonomous equipped underwater vehicle (100) according to any of the claims from 6 to 11, wherein said scalar magnetometers (12) measure the magnetic field with Nuclear Magnetic Resonance technologies.

13. The autonomous equipped underwater vehicle (100) according to any of the previous claims, comprising:

- a hull (1) ;
- at least one propulsion system (3);
- at least one actuation system (2);
- at least one feeding system (7);
- at least one control system (6).

14. Use of the autonomous equipped underwater vehicle (100) according to any of the previous claims, for identifying potential areas useful for oil exploitation.

15. An analysis method of the geophysical characteristics of the subsoil, comprising the acquisition of the gravimetric and magnetic gradient in an underwater environment **characterized by** the following phases:

- use of an autonomous equipped underwater vehicle (100) according to any of claims 1-13;
- immersion of said vehicle (100) to the proximity of the seabed;
- navigation along a programmed route;
- acquisition and storage of the data collected by said gradiometers and said instruments with correlation to the geographic measurement point;
- recovery of the data collected and use thereof for geophysical analysis of the subsoil.

16. The autonomous equipped underwater vehicle (100) according to claim 1, wherein the gravimetric gradiometer (5) comprises:

- a first spherical casing (13) connected to the autonomous equipped underwater vehicle (100) and capable of resisting high pressures;
- a second casing (14) having smaller dimensions than the first casing (13) and connected to it by means of a cardan joint system (17);
- a third casing (15) having smaller dimensions than the second casing (14) connected to it by means of a cardan joint (18) which allows its oscillation inside the second casing (14), wherein said third casing is provided with a system of weights (19) installed in the lower part;
- two accelerometers (16) aligned along the vertical, situated at a distance of less than 60 cm from each other and constrained inside the structure of the third casing (15)

17. The autonomous equipped underwater vehicle (100) according to claim 16, wherein said accelerometers (16) of the gravimetric gradiometer (5) are situated at a distance ranging from 10 to 40 cm from each other.

**Patentansprüche**

1. Ein autonomes ausgestattetes Unterwasserfahrzeug (100) zur Erfassung des gravimetrischen und magnetischen Gradienten nahe dem Meeresboden, **dadurch gekennzeichnet, dass** es Folgendes beinhaltet:

- mindestens ein gravimetrisches Gradiometer (5);
- mindestens ein magnetisches Gradiometer (4).

2. Autonomes ausgestattetes Unterwasserfahrzeug (100) gemäß Anspruch 1, wobei das gravimetrische Gradiometer (5) die vertikale Komponente Tzz des gravimetrischen Gradienten misst.

3. Autonomes ausgestattetes Unterwasserfahrzeug (100) gemäß einem der vorhergehenden Ansprüche, wobei das gravimetrische Gradiometer (5) zwei Beschleunigungsmesser mit einer Empfindlichkeit von 1 $\mu Gal / \sqrt{Hz}$ innerhalb eines Frequenzbereichs von weniger als $10^{-1}$ Hz beinhaltet.

**4.** Autonomes ausgestattetes Unterwasserfahrzeug (100) gemäß Anspruch 3, wobei der Frequenzbereich von $10^{-4}$ Hz bis $10^{-2}$ Hz reicht.

**5.** Autonomes ausgestattetes Unterwasserfahrzeug (100) gemäß einem der vorhergehenden Ansprüche, wobei das gravimetrische Gradiometer (5) in dem Baryzentrum des autonomen ausgestatteten Unterwasserfahrzeugs (100) positioniert ist.

**6.** Autonomes ausgestattetes Unterwasserfahrzeug (100) gemäß Anspruch 1, wobei das magnetische Gradiometer (4) aus mindestens zwei skalaren Magnetometern (12) besteht, die mit dem Fahrzeug (100) integral sind und innerhalb und/oder außerhalb der Hülle (1) des Fahrzeugs (100) angeordnet sind.

**7.** Autonomes ausgestattetes Unterwasserfahrzeug (100) gemäß Anspruch 6, wobei die skalaren Magnetometer (12), die den magnetischen Gradiometer (4) bilden, 3 sind.

**8.** Autonomes ausgestattetes Unterwasserfahrzeug (100) gemäß Anspruch 6, wobei die skalaren Magnetometer (12) mit einer Distanz von 20 cm bis 10 m voneinander positioniert sind.

**9.** Autonomes ausgestattetes Unterwasserfahrzeug (100) gemäß Anspruch 8, wobei die skalaren Magnetometer (12) mit einer Distanz von 40 cm bis 1,5 m voneinander positioniert sind.

**10.** Autonomes ausgestattetes Unterwasserfahrzeug (100) gemäß Anspruch 6, wobei die skalaren Magnetometer (12), die das magnetische Gradiometer (4) bilden, Messungen des Magnetfelds mit einer Genauigkeit von bis zu 0,01 nT ausführen.

**11.** Autonomes ausgestattetes Unterwasserfahrzeug (100) gemäß Anspruch 10, wobei die skalaren Magnetometer (12), die das magnetische Gradiometer (4) bilden, Messungen des Magnetfelds mit einer Genauigkeit von bis zu 0,1 nT ausführen.

**12.** Autonomes ausgestattetes Unterwasserfahrzeug (100) gemäß einem der Ansprüche 6 bis 11, wobei die skalaren Magnetometer (12) das Magnetfeld mit Kernspinresonanzmethoden messen.

**13.** Autonomes ausgestattetes Unterwasserfahrzeug (100) gemäß einem der vorhergehenden Ansprüche, das Folgendes beinhaltet:

- eine Hülle (1);
- mindestens ein Antriebssystem (3);
- mindestens ein Betätigungssystem (2);
- mindestens ein Versorgungssystem (7);
- mindestens ein Steuerungssystem (6).

**14.** Eine Verwendung des autonomen ausgestatteten Unterwasserfahrzeugs (100) gemäß einem der vorhergehenden Ansprüche zum Identifizieren von möglichen Bereichen, die zur Ölsuche nützlich sind.

**15.** Ein Analyseverfahren der geophysikalischen Charakteristiken des Untergrunds, beinhaltend die Erfassung des gravimetrischen und magnetischen Gradienten in einer Unterwasserumgebung, gekennzeichnet durch die folgenden Phasen:

- Verwendung eines autonomen ausgestatteten Unterwasserfahrzeugs (100) gemäß einem der Ansprüche 1-13;
- Untertauchen des Fahrzeugs (100) in die Nähe des Meeresbodens;
- Navigation entlang einer programmierten Route;
- Erfassung und Speicherung der von den Gradiometern und den Instrumenten gesammelten Daten mit Bezug auf den geographischen Messpunkt;
- Wiedererlangen der gesammelten Daten und Verwendung davon zur geophysikalischen Analyse des Untergrunds.

**16.** Autonomes ausgestattetes Unterwasserfahrzeug (100) gemäß Anspruch 1, wobei das gravimetrische Gradiometer (5) Folgendes beinhaltet:

- ein erstes sphärisches Gehäuse (13), das mit dem autonomen ausgestatteten Unterwasserfahrzeug (100) verbunden ist und in der Lage ist, hohen Drücken zu widerstehen;
- ein zweites Gehäuse (14), das kleinere Dimensionen als das erste Gehäuse (13) aufweist und mittels eines Kardangelenksystems (17) damit verbunden ist;
- ein drittes Gehäuse (15), das kleinere Dimensionen als das zweite Gehäuse (14) aufweist und mittels eines Kardangelenks (18) damit verbunden ist, das seine Oszillation innerhalb des zweiten Gehäuses (14) ermöglicht, wobei das dritte Gehäuse mit einem Gewichtssystem (19) versehen ist, das in dem unteren Teil installiert ist;
- zwei Beschleunigungsmesser (16), die entlang der Vertikalen ausgerichtet sind, angeordnet mit einer Distanz von weniger als 60 cm voneinander und eingezwängt innerhalb der Struktur des dritten Gehäuses (15).

**17.** Autonomes ausgestattetes Unterwasserfahrzeug (100) gemäß Anspruch 16, wobei die Beschleunigungsmesser (16) des gravimetrischen Gradiometers (5) mit einer Distanz im Bereich von 10 bis 40 cm voneinander angeordnet sind.

## Revendications

**1.** Un véhicule sous-marin équipé autonome (100) destiné à l'acquisition du gradient gravimétrique et magnétique près du lit marin, **caractérisé en ce qu'**il comprend :

   - au moins un gradiomètre gravimétrique (5) ;
   - au moins un gradiomètre magnétique (4).

**2.** Le véhicule sous-marin équipé autonome (100) selon la revendication 1, dans lequel ledit gradiomètre gravimétrique (5) mesure la composante verticale Tzz du gradient gravimétrique.

**3.** Le véhicule sous-marin équipé autonome (100) selon n'importe lesquelles des revendications précédentes, dans lequel ledit gradiomètre gravimétrique (5) comprend deux accéléromètres ayant une sensibilité de 1 $\mu Gal \left/ \sqrt{Hz} \right.$ au sein d'une plage de fréquences inférieure à $10^{-1}$ Hz.

**4.** Le véhicule sous-marin équipé autonome (100) selon la revendication 3, dans lequel ladite plage de fréquences va de $10^{-4}$ Hz à $10^{-2}$ Hz.

**5.** Le véhicule sous-marin équipé autonome (100) selon n'importe lesquelles des revendications précédentes, dans lequel ledit gradiomètre gravimétrique (5) est positionné au barycentre dudit véhicule sous-marin équipé autonome (100).

**6.** Le véhicule sous-marin équipé autonome (100) selon la revendication 1, dans lequel ledit gradiomètre magnétique (4) consiste en au moins deux magnétomètres scalaires (12) solidaires dudit véhicule (100) et situés à l'intérieur et/ou à l'extérieur de la coque (1) du véhicule (100).

**7.** Le véhicule sous-marin équipé autonome (100) selon la revendication 6, dans lequel lesdits magnétomètres scalaires (12) formant ledit gradiomètre magnétique (4) sont au nombre de 3.

**8.** Le véhicule sous-marin équipé autonome (100) selon la revendication 6, dans lequel lesdits magnétomètres scalaires (12) sont positionnés à une distance de 20 cm à 10 m les uns des autres.

**9.** Le véhicule sous-marin équipé autonome (100) selon la revendication 8, dans lequel lesdits magnétomètres scalaires (12) sont positionnés à une distance de 40 cm à 1,5 m les uns des autres.

**10.** Le véhicule sous-marin équipé autonome (100) selon la revendication 6, dans lequel lesdits magnétomètres scalaires (12) formant ledit gradiomètre magnétique (4) effectuent des mesures du champ magnétique avec une exactitude allant jusqu'à 0,01 nT.

**11.** Le véhicule sous-marin équipé autonome (100) selon la revendication 10, dans lequel lesdits magnétomètres scalaires (12) formant ledit gradiomètre magnétique (4) effectuent des mesures du champ magnétique avec une exactitude allant jusqu'à 0,1 nT.

**12.** Le véhicule sous-marin équipé autonome (100) selon n'importe lesquelles des revendications 6 à 11, dans lequel lesdits magnétomètres scalaires (12) mesurent le champ magnétique avec des technologies de résonance magnétique nucléaire.

**13.** Le véhicule sous-marin équipé autonome (100) selon n'importe lesquelles des revendications précédentes, comprenant :

   - une coque (1) ;
   - au moins un système de propulsion (3) ;
   - au moins un système de mise en action (2) ;
   - au moins un système d'alimentation (7) ;
   - au moins un système de commande (6).

**14.** Utilisation du véhicule sous-marin équipé autonome (100) selon n'importe lesquelles des revendications précédentes, pour identifier des zones potentielles utiles pour l'exploration pétrolière.

**15.** Une méthode d'analyse des caractéristiques géophysiques du sous-sol, comprenant l'acquisition du gradient gravimétrique et magnétique dans un environnement sous-marin **caractérisée par** les phases suivantes :

   - utilisation d'un véhicule sous-marin équipé autonome (100) selon n'importe lesquelles des revendications 1 à 13 ;
   - immersion dudit véhicule (100) jusqu'à proximité du lit marin ;
   - navigation le long d'un parcours programmé ;
   - acquisition et stockage des données collectées par lesdits gradiomètres et lesdits instruments avec corrélation avec le point de mesure géographique ;
   - récupération des données collectées et utilisation de celles-ci pour l'analyse géophysique du sous-sol.

**16.** Le véhicule sous-marin équipé autonome (100) selon la revendication 1, dans lequel le gradiomètre gravimétrique (5) comprend :

   - un premier carter sphérique (13) raccordé au véhicule sous-marin équipé autonome (100) et capable de résister à des pressions élevées ;
- un deuxième carter (14) de dimensions plus petites que le premier carter (13) et raccordé à ce dernier au moyen d'un système à joint de cardan (17) ;
- un troisième carter (15) de dimensions plus petites que le deuxième carter (14) raccordé à ce dernier au moyen d'un joint de cardan (18) lui permettant d'osciller à l'intérieur du deuxième carter (14), dans lequel ledit troisième carter est muni d'un système de poids (19) installés dans la partie inférieure ;
- deux accéléromètres (16) alignés le long de la verticale, situés à une distance de moins de 60 cm l'un de l'autre et bloqués à l'intérieur de la structure du troisième carter (15).

17. Le véhicule sous-marin équipé autonome (100) selon la revendication 16, dans lequel lesdits accéléromètres (16) dudit gradiomètre gravimétrique (5) sont situés à une distance allant de 10 à 40 cm l'un de l'autre.

100

8

9

3

10

4

2

1

11

12

Fig. 1

Fig. 2

EP 2 630 520 B1

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006020662 A
- US 20100153050 A